# FASCICULE DE BREVET EUROPEEN

(11) **EP 0 404 614 B1**
(45) Date de publication et mention de la délivrance du brevet: **13.01.1993**
(21) Numéro de dépôt: 90401437.0
(22) Date de dépôt: 30.05.1990
(51) Int. Cl.: B60J 10/08

(54) **Joint d'étanchéité à montage sur le bord d'un élément tel qu'un panneau**
Einbaudichtung für den Rand eines Elementes, insbesondere eines Paneels
Sealing joint for assembly on the edge of a component such as a panel

(30) Priorité: 20.06.1989 FR 8908210
(43) Date de publication de la demande: 27.12.1990
(73) Titulaire: AUTOMOBILES PEUGEOT, 75116 Paris (FR); AUTOMOBILES CITROEN, 92200 Neuilly-sur-Seine (FR)
(72) Inventeur: Bahout, Bernard, F-35580 Guichen (FR)
(74) Mandataire: Durand, Yves Armand Louis

(56) Documents cités:
- FR-A- 2 370 206

## Description

La présente invention a pour objet un joint d'étanchéité pouvant être monté sur le bord d'un élément quelconque tel que par exemple un panneau formé par une tôle ou une vitre non coulissante de véhicule automobile, et du type tel que défini dans le préambule de la revendication 1.

On connaît déjà des joints d'étanchéité du type ci-dessus qui comprennent essentiellement une partie en forme d'épingle ou de U pouvant s'engager par pincement sur le bord du panneau et une partie solidaire du U ou de l'épingle susceptible d'exercer une fonction d'étanchéité (voir document FR-A 2 370 206).

Dans ce genre de joint, la partie en forme d'épingle ou de U est intérieurement munie d'une ou plusieurs lèvres faisant saillie à l'intérieur du U et en appui élastique sur une paroi du panneau de façon à réaliser ainsi une fonction de serrage et d'étanchéité.

Pour faciliter le montage du joint, il convient que sa partie en forme d'épingle puisse s'engager avec un effort minimal sur le bord du panneau étant entendu, qu'en dépit de cela, le joint devra présenter une grande résistance à l'arrachement. Or, si les joints d'étanchéité actuellement connus présentent une bonne résistance à l'arrachement, ils présentent malheureusement une forte résistance à l'engagement sur le bord du panneau, ce qui constitue un inconvénient se traduisant par exemple par la détérioration des lèvres.

Par ailleurs, le panneau sur lequel est montée la partie en épingle ou U du joint peut présenter des épaisseurs variables. Il convient par conséquent qu'une même épingle présente la même facilité d'engagement et la même résistance à l'arrachement pour plusieurs épaisseurs de panneau, ce qui n'est pas le cas avec les joints antérieurement connus.

Aussi, la présente invention a pour but de remédier aux inconvénients et de résoudre les problèmes ci-dessus en proposant un joint d'étanchéité qui présente une faible résistance à l'engagement sur le bord d'un panneau et une forte résistance à l'arrachement, laquelle résistance à l'arrachement est indépendante de l'épaisseur du panneau.

A cet effet, l'invention a pour objet un joint d'étanchéité pouvant être monté sur le bord d'un élément quelconque tel que par exemple un panneau formé par une tôle ou une vitre non coulissante de véhicule automobile, et du type comprenant une partie ayant une fonction d'étanchéité et solidaire d'une partie en forme d'épingle ou de U pouvant s'engager sur le bord de l'élément et intérieurement munie d'au moins une lèvre faisant saillie à l'intérieur du U et susceptible de prendre élastiquement appui sur une paroi de l'élément,caractérisé en ce que la lèvre interne possède, pour ce qui est de sa partie en regard de la paroi de l'élément, un profil en forme d'arc de spirale logarithmique qui est centrée sur le point d'articulation de la lèvre à la paroi interne de l'épingle et qui est telle que l'angle du rayon vecteur avec la normale au point de contact de la lèvre interne sur l'élément est inférieur à l'angle de frottement des matériaux respectivement de la lèvre et de l'élément, de sorte que la lèvre interne pourra exercer une force s'opposant à l'arrachement du joint dont l'orientation est indépendante de l'élément.

On précisera encore ici que la longueur de l'arc de spirale logarithmique précitée est déterminée en fonction des épaisseurs respectivement minimale et maximale possibles que peut présenter l'élément.

Le joint selon un mode de réalisation de cette invention est encore caractérisé en ce que la lèvre précitée est reliée à la paroi interne de la partie en forme d'épingle ou de U par un film mince très résistant en traction-compression et très souple en flexion.

Suivant encore un autre un mode de réalisation de ce joint, la partie en forme d'épingle ou de U comporte sur sa paroi interne et du même côté que la lèvre, un talon situé au voisinage de l'extrémité libre de l'épingle et sur lequel peut prendre appui ladite lèvre sous l'effet d'une force d'arrachement de l'élément.

Le joint selon un mode de réalisation de cette invention peut comporter une ou plusieurs lèvres internes sur une ou les deux parois internes de la partie en forme d'épingle ou de U.

Mais d'autres caractéristiques et avantages de l'invention apparaîtront mieux dans la description détaillée qui suit faite en référence aux dessins annexés et dans lesquels :
- la figure 1 est une vue en section transversale d'un joint d'étanchéité conforme aux principes de l'invention et illustré en position montée sur le bord d'un panneau;
- les figures 2 et 3 sont des vues similaires à la figure 1 mais montrent le joint en position montée sur un panneau de forte épaisseur et de faible épaisseur respectivement; et
- la figure 4 est une vue similaire aux figures précédentes, et illustre la mise en place du joint sur le bord du panneau.

En se reportant aux figures, on voit, en section transversale, un joint d'étanchéité monté sur un panneau P qui peut revêtir la forme d'une portière ou d'une vitre non coulissante de véhicule automobile encadrée par ledit joint.

Ce joint comprend une partie 1 en forme d'épingle ou de U engagée ou chaussée sur le bord du panneau P, et une partie 2 exerçant une fonction d'étanchéité sur un autre élément (non représenté), cette partie 2 étant solidaire de la partie 1. Les parties 1 et 2 sont en tout matériau approprié tel que caoutchouc, élastomère ou analogue.

La partie 1 en forme d'épingle est intérieurement munie d'une ou plusieurs lèvres telles que 3 faisant saillie à l'intérieur de l'épingle et susceptibles de prendre élastiquement appui sur la paroi 4 du panneau P pour exercer ainsi une fonction de serrage et d'étanchéité.

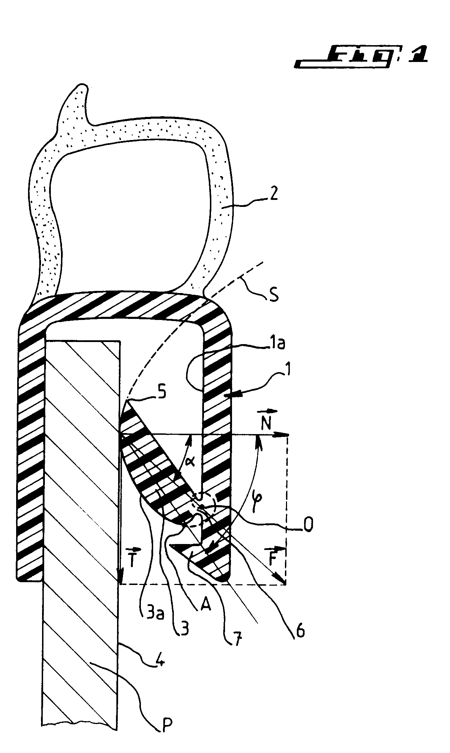

Conformément à l'invention et comme on le voit bien sur la figure 1, la partie 3a de la lèvre 3 en regard de la paroi 4 du panneau P présente un profil en forme d'arc de spirale logarithmique S qui est centrée, comme on le voit en 0, sur le point d'articulation de la lèvre 3 à la paroi interne 1a de la partie en forme d'épingle 1.

La spirale logarithmique S est déterminée de façon à procurer une résistance maximale à l'arrachement en fonction de la nature des matériaux de la lèvre 3 et du panneau P respectivement, comme on l'expliquera en détail plus loin.

On rappellera ici que, selon une propriété de la spirale logarithmique, l'angle formé par la droite joignant un point quelconque de la spirale au centre de cette spirale et la tangente à la courbe en ce point est constant de sorte que, dans le cas présent, la lèvre 3 pourra exercer une force s'opposant à l'arrachement du joint dont l'orientation est indépendante de l'épaisseur du panneau P.

Sur la figure 1, on a montré en N l'effort suivant la normale au point de contact de la lèvre 3 sur la paroi 4 du panneau P, en T l'effort de traction, et en F la résultante qui passe par le centre O de la spirale logarithmique et qui se confond avec le rayon vecteur de ladite spirale.

Ainsi, comme on le voit bien sur la figure 1, la spirale logarithmique S est telle que l'angle α du rayon vecteur F avec la normale N est inférieur à l'angle de frottement φ des matériaux respectivement de la lèvre 3 et du panneau P.

Autrement dit, l'angle α étant inférieur à l'angle φ , il y a arc-boutement de la lèvre 3 qui s'oppose ainsi à l'arrachement, c'est-à-dire qui bloque le joint par sa partie en épingle 1, sur le panneau P.

On précisera encore ici que la longueur de l'arc de spirale logarithmique constituant la partie 3a de la lèvre 3 est déterminée en fonction des épaisseurs maximale et minimale possibles que peut présenter le panneau P dans la partie en épingle 1 du joint.

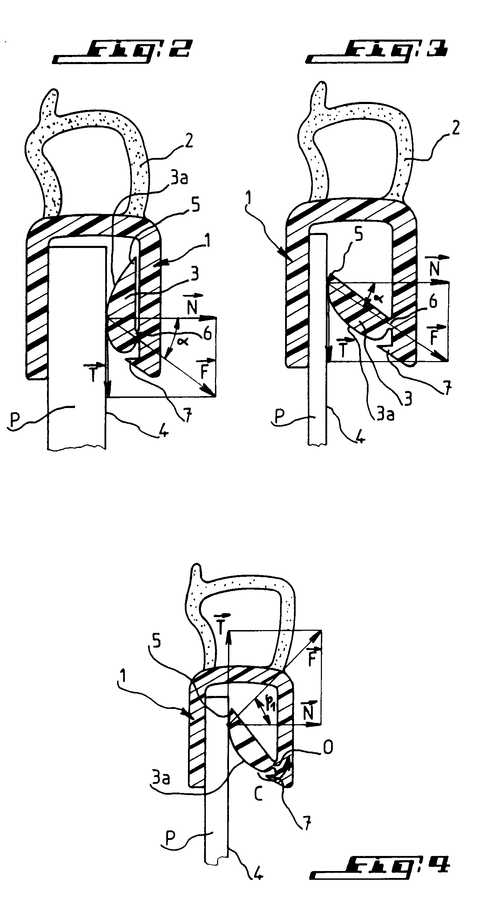

Ainsi, comme on le voit sur la figure 1, la forme en arc de spirale logarithmique de la partie 3a de la lèvre 3 pourra s'étendre depuis le point A jusqu 'à sensiblement le bord libre 5 de la lèvre 3. En se reportant maintenant aux figures 2 et 3, on voit que la force résultante fait avec N le même angle α pour un panneau épais (figure 2) ou pour un panneau mince (figure 3) et s'exprime par la relation F = T/sin α quelle que soit l'épaisseur.

Dès lors, l'arc-boutement de la lèvre 3 sera obtenu quelle que soit l'épaisseur du panneau, ce qui n'était pas le cas dans les joints antérieurement connus. En d'autres termes, si les matériaux de la lèvre 3 et du panneau P sont choisis de telle façon que l'angle α soit inférieur ou égal à l'angle φ , on obtiendra l'arc-boutement de la lèvre pour toute épaisseur de panneau compatible avec le joint.

La lèvre 3 est reliée à la paroi interne 1a de la partie 1 en forme d'épingle par un film mince que l'on a repéré en 6 sur la figure 1. Ce film joue le rôle d'une charnière et il est très résistant en traction-compression et très souple en flexion, ce qui permet un effort de mise en place très faible du joint sur le panneau P, tout en conservant une excellente résistance à l'arrachement après montage, grâce à l'arc-boutement de la lèvre.

A cet égard, si l'on se réfère à la figure 4, on voit que la résistance à la mise en place du joint dépend du couple opposé par la charnière à la flexion de la lèvre. Ce couple C devient très faible si l'épaisseur du film-charnière est faible.

On a montré en 7 sur les figures un talon prévu à l'extrémité libre de la partie en épingle 1, et sur lequel peut prendre appui la lèvre 3 sous l'effet d'une force d'arrachement du joint. Un tel talon faisant saillie vers l'intérieur de l'épingle et situé du même côté que la lèvre 3 n'est nullement obligatoire mais permet avantageusement d'utiliser un film-charnière 6 très mince, car, grâce au talon 4 sur lequel elle prendra appui, ledit film ne risquera pas d'être déchiré.

Sur les figures, on a représenté une seule lèvre 3, mais il va sans dire que le joint selon cette invention pourrait comporter plusieurs lèvres internes telles que 3 sur une ou les deux branches de la partie 1 en forme d'épingle ou de U.

On a donc réalisé suivant l'invention un joint d'étanchéité présentant une faible résistance à la mise en place sur le bord d'un panneau P et une forte résistance à l'arrachement qui est indépendante de l'épaisseur du panneau sur lequel il est monté.

On observera à cet égard que l'effort de mise en place ou d'emmanchement et l'effort d'arrachement sont dans un rapport de 1 à 10 au lieu de 1 à 2 ou 1 à 3 avec les joints à lèvres antérieurement connus.

Bien entendu l'invention n'est nullement limitée au mode de réalisation décrit et illustré qui n'a été donné qu'à titre d'exemple.

C'est ainsi que le nombre et la répartition des lèvres peuvent être quelconques, de même que la ou les matières constituant le joint.

De même, la partie de l'épingle ou du U dépourvue de lèvres sur les figures, peut en comporter dans la plupart des cas, même si leur forme est différente de la spirale logarithmique, ces lèvres assurant généralement la fonction étanchéité et/ou la localisation de l'appui sur le panneau.

## Revendications

1. Joint d'étanchéité pouvant être monté sur le bord d'un élément (P) quelconque tel que par exemple un panneau formé par une tôle ou une vitre non coulissante de véhicule automobile, et du type comprenant une partie (2) ayant une fonction d'étanchéité et solidaire d'une partie (1) en forme d'épingle ou de U pouvant s'engager sur le bord de l'élément (P) et intérieurement munie d'au moins une lèvre (3) faisant saillie à l'intérieur du U et susceptible de prendre élastiquement appui sur une paroi (4) de l'élément (P), caractérisé en ce que la lèvre interne (3) possède, pour ce qui est de sa partie (3a) en regard de la paroi (4) de l'élément (P), un profil en forme d'arc de spirale logarithmique (S) qui est centrée sur le point (O) d'articulation de la lèvre à la paroi interne (1a) de l'épingle (1) et qui est telle que l'angle ( α ) du rayon vecteur avec la normale au point de contact de la lèvre interne (3) sur l'élément (P) est inférieur à l'angle de frottement (φ) des matériaux respectivement de la lèvre et de l'élément, de sorte que la lèvre interne (3) pourra exercer une force s'opposant à l'arrachement du joint dont l'orientation est indépendante de l'épaisseur de l'élément (P).

2. Joint selon la revendication 1, caractérisé en ce que la longueur de l'arc de spirale logarithmique précitée est déterminée en fonction des épaisseurs respectivement minimale et maximale possibles que peut présenter l'élément (P).

3. Joint selon la revendication 1 ou 2, caractérisé en ce que la lèvre précitée (3) est reliée à la paroi interne (1a) de la partie en forme d'épingle ou de U par un film mince (6) très résistant en traction-compression et très souple en flexion.

4. Joint selon l'une des revendications 1 à 3, caractérisé en ce que la partie (1) en forme d'épingle ou de U comporte sur sa paroi interne (1a) et du même côté que la lèvre (3), un talon (7) situé au voisinage de l'extrémité libre de l'épingle et sur lequel peut prendre appui ladite lèvre sous l'effet d'une force d'arrachement de l'élément.

5. Joint selon l'une des revendications précédentes, caractérisé en ce qu'il comporte une ou plusieurs lèvres internes précitées (3) sur une ou les deux parois internes de la partie en forme d'épingle ou de U (1).

## Patentansprüche

1. Dichtung, die fähig ist, an dem Rand irgendeines Elementes (P), wie zum Beispiel einer aus Blech oder aus einer nicht gleitbaren Fensterscheibe eines Kraftfahrzeugs bestehenden Platte und derjenigen Gattung mit einem eine Abdichtungsfunktion aufweisenden Teil (2), der mit einem auf den Rand des Elementes (P) aufsetzbaren, Haarnadel-, oder U-förmigen Teil (1) fest verbunden ist, der innen mit wenigstens einer nach dem inneren des U's vorstehenden und an einer Wandung (4) des Elementes (5) elastisch abstützbaren Lippe (3) versehen ist, dadurch gekennzeichnet, dass die innere Lippe (3), was ihren der Wandung (4) des Elementes (P) gegenüberliegenden Teil (3a) anbetrifft, ein Profil in der Gestalt eines Bogens einer logarithmischen Spirale (S) hat, die auf den Anlenkungspunkt (O) der Lippe an der inneren Wandung (1a) der Nadel (1) zentriert ist und die derart ausgebildet ist, dass der Winkel ( α ) des Radiusvektors mit der Normalen am Berührungspunkt der inneren Lippe (3) mit dem Element (P) kleiner als der Reibungswinkel ( φ ) der Werkstoffe jeweils der Lippe und des Elementes ist, so dass die innere Lippe (3) eine sich dem Abreissen der Dichtung wiedersetzende Kraft ausüben können wird, deren Ausrichtung unabhängig von der Dicke des Elementes (P) ist.

2. Dichtung nach Anspruch 1, dadurch gekennzeichnet, dass die Länge des Bogens der logarithmischen vorgenannten Spirale in Abhängigkeit der möglichen jeweils minimalen und maximalen Dicken, die das Element aufweisen kann, bestimmt wird.

3. Dichtung nach Anspruch 1 oder 2, dadurch gekennzeichnet, dass die vorgenannte Lippe (3) mit der inneren Wandung (1a) des Nadel- oder U-förmigen Teiles durch eine sehr zug-druckfeste und sehr Biegungsnachgiebige dünne Folie (6) verbunden ist.

4. Dichtung nach einem der Ansprüche 1 bis 3, dadurch gekennzeichnet, dass der Nadel-bzw. U-förmige Teil (1) an seiner inneren Wandung (1a) und auf derselben Seite wie die Lippe (3) einen in der Nachbarschaft des freien Endes der Nadel liegenden Absatz (7) aufweist, an welchem die besagte Lippe unter der Wirkung einer Kraft, die bestrebt ist, das Element herauszureissen, abstützbar ist.

5. Dichtung nach einem der vorangehenden Ansprüche, dadurch gekennzeichnet, dass sie eine oder mehrere vorgenannte(n) Lippe(n) (3) an einer oder an den beiden inneren Wandung(en) des Nadel-bzw. U-förmigen Teiles (1) aufweist.

## Claims

1. Sealing joint which may be mounted on the edge of any element (P) whatsoever such for example as a panel formed of a metal sheet or a non-sliding window pane of an automotive vehicle and of the type comprising a portion (2) having a sealing function and made fast to a pin- or U-shaped portion (1) which may be fitted onto the edge of the element (P) and internally provided with at least one lip (3) projecting inwards of the U and capable of bearing elastically upon a wall (4) of the element (P), characterized in that the internal lip (3) has, as regards its portion (3a) in front of the wall (4) of the element (P), a profile in the shape of an arc of logarithmic spiral (S) which is centered on the point (O) of pivotal connection of the lip to the internal wall (1a) of the pin (1) and which is such that the angle (α) of the vector radius with the normal to the point of contact of the internal lip (3) upon the element (P) is lower than the angle of friction (φ) of the materials of the lip and of the element, respectively, so that the internal lip (3) will be capable of exerting a force opposing the tearing away of the joint the orientation of which is independent of the thickness of the element (P).

2. Joint according to claim 1, characterized in that the length of the arc of the aforesaid logarithmic spiral is determined as a function of the possible minimum and maximum thicknesses, respectively, which the element (P) may exhibit.

3. Joint according to claim 1 or 2, characterized in that the aforesaid lip (3) is connected to the internal wall (1a) of the pin- or U-shaped portion by a thin film (6) very resistant to traction-compression and very flexible in bending.

4. Joint according to one of the claims 1 to 3, characterized in that the pin- or U-shaped portion (1) comprises on its internal wall (1a) and on the same side as the lip (3) a heel (7) located in the vicinity of the free end of the pin and upon which may bear the said lip under the effect of a force of tearing away the element.

5. Joint according to one of the foregoing claims, characterized in that it comprises one or several aforesaid internal lip(s) (3) on one or both internal wall(s) of the pin- or U-shaped portion (1).
